Europäisches Patentamt

European Patent Office

Office européen des brevets

(11) Publication number: **0 668 244 A1**

# EUROPEAN PATENT APPLICATION

(21) Application number: 94630011.8

(22) Date of filing: **18.02.94**

(51) Int. Cl.6: **C02F 1/465**, C02F 1/78

(43) Date of publication of application:
**23.08.95 Bulletin 95/34**

(84) Designated Contracting States:
**CH DE ES GB LI**

(71) Applicant: **NATIONAL RESEARCH
DEVELOPMENT CORPORATION
Anusandhan Vikas,
20-22 Zamroodpur Community Centre,
Kailash Colony Extension
New Delhi 110 048 (IN)**

(72) Inventor: **Bhatt, Shailesh Rasikchandra
ATIRA**

**P.O. Polytechnic
Ahmedabad - 380 015
Gujarat (IN)**
Inventor: **Parikh, Bharat Siddharthbhai
A2, Tirthankar Apt.
26, Gujarat Society
Paldi
Ahmedabad - 380 007 (IN)**

(74) Representative: **Schmitz, Jean-Marie et al
Dennemeyer & Associates Sàrl
P.O. Box 1502
L-1015 Luxembourg (LU)**

(54) Effluent treatment involving electroflotation.

(57) The present invention relates to a process for treatment of waste water, for purification thereof, comprising causing ascending flow of the waste water under treatment, through a column (2), made of plastics, having composite electrodes (7) immersed therein, the anode of the said electrodes being constituted by combination of iron and aluminium, while the cathode being constituted by iron alone, the said column being provided on its top with a hopper-bottom receptacle made of plastics (3), so that on energisation of the said electrodes, the ascending flow of the waste water is subjected to electrochemical reaction, whereby the impurities in the waste water are separated and are drained out from top of the column, followed by filtration (10) of the water, so purified, by passing it through a filter medium (11), and, optionally, if so required, spurging sub-microscopic bubbles of air in upward direction through the column, in the course of electrolysis of the waste water, for carrying the suspended solids in the waste water, under treatment, upwards, so as to be drained out through the outlet (5), provided on top of the column.

EP 0 668 244 A1

FIG. 1

## Background of the Invention :

The present invention relates to process for treatment of waste water, for purification thereof and also recycle of treated water and, in particular, for the effective removal of dissolved/undissolved impurities present in waste water effluent, generated in various industries, e.g. in textile/chemical processing operations.

Effluents generated from the aforementioned industrial units, and, in particular, textile/chemical waste waters contain the following impurities, which are needed to be removed effectively by proper treatment :

Total suspended solids (T.S.S), total dissolved solids (T.D.S), Biochemical Oxygen Demand (B.O.D), Chemical Oxygen demand (C.O.D), oil and grease, colour, detergents, ammoniacal nitrogen, percentage sodium, heavy metals and toxic compounds, phenolies amongst others, as also to bring the pH to acceptable level.

These impurities are normally removed by coagulation-flocculation-sedimentation process followed by appropriate secondary and tertiary treatment after controlling pH. Such combinations of treatments are not always capable of removing the aforesaid impurities to the permissible limit except pH. Moreover, they produce excessive amount of sludge containing enormous concentrations of the impurities and are prohibitively expensive.

Besides, these processes or systems have large space requirements due to long retention periods for high flow rate of textile effluents. They are sensitive to radiations in influent characteristics.

In the conventional coagulation-flocculation-settling technique, aluminium sulfate, ferric chloride and ferrous sulphate are used. The chemistry involved in removing the impurities is as follows :

$$Al_2(SO_4)_3 \rightleftharpoons Al^{+++} + SO_4^{--}$$
$$Al^{+++} + 3H_2O \rightleftharpoons Al(OH)_3 + 6H^+$$
$$FeCl_3 \rightleftharpoons Fe^{+3} + 3Cl^-$$
$$Fe^{+3} + 3H_2O \rightleftharpoons Fe(OH)_3 + 3H^+$$
$$FeSo_4 \rightleftharpoons Fe^{+2} + So_4^{-2}$$
$$Fe^{+2} + H_2O \rightleftharpoons Fe(OH)_2 + 2H^+$$

Aluminium Ferric and Ferrous hydroxide flocs which are insoluble in certain range of pH while settling, remove the impurities in the waste water. Also Aluminium Ferrous and Ferric ions react chemically with the colouring impurities and the resultant reaction products settle. This is a costly process, in terms of recurring cost.

The problem was attempted to be solved by using conventional Dissolved Air floatation device (DAF system). In known DAF systems, the coagulated waste water along with compressed air is pumped through a pressurising pump into an air dissolving tube usually maintained at 55-85 psig pressure and thereafter abruptly releasing the pressure on the effluent thereby causing excessive air to come out as fine submicroscopic bubbles. This conventional DAF device entails higher capital cost due to requirement of specific equipments like high pressure pump, tube, container and the like.

## PRIOR ART :

The following patents were also found in similar area of technology but did not teach any of the novel features of this invention :

| FRANCE | 2488870A |
|---|---|
| RUSSIA | 1161477A |
| RUSSIA | 966025A |
| JAPAN | 79164761 (791220) |
| GERMANY | 3830344A |
| UNITED STATES | 4540052 |
| EUROPEAN PATENT | 82810484 (821111) |
| EUROPEAN PATENT | 82107779 (820825) |

EP 0 668 244 A1

**Brief summary of the Invention :**

The applicants herein had developed an electrolytic process for treatment of textile effluents, which is cheaper, in operation, compared to the aforementioned equivalent conventional treatment processes. Said electrolytic process comprises holding effluent (electrolyte) in a tank, passing D.C. current through sacrifical steel electrodes provided in the tank for a predetermined time to generate in-situ highly active Fe and Fe ions to act as coagulating agents/ions that react with hydroxide (OH) ions and finally suspended/collodial/dissolved impurities to form flocs, to entrap the said impurities and also to remove the colour.

In the aforementioned electrolytic process, D.C. current is passed through the electrodes $Fe^{+2}$ , $Fe^{+3}$ and (OH)(-) ions are generated according to Faraday's Law and the sacrificial electrode which is anode is consumed. The $Fe^{+2}$, $Fe^{+3}$ react with (OH) -ions and other finely suspended/collodial/dissolved impurities to form flocs. These flocs entrap suspended and/or collodial impurities by absorption and/or adsorption while settling at the bottom or floating at the top thereby removing most of the apparent colour. The chemistry involved in the process is as follows :

$$i) \quad Fe + 2H_2O \xrightarrow{\ 2e/H_2\ } Fe(+2) + 2(OH)^-$$

$$ii) \quad Fe(+2) + 2\ OH(-) \xrightarrow{\ HM\ e.g.\ Cu(+2)\ } HM.\ Fe(OH)_2$$

$$iii) \quad Fe(+2) + 2OH(-) \xrightarrow{\ Pollutant\ } Pollutant\ Fe(OH)_2 + water$$

**Object of the Invention :**

The object of the present invention is to provide an improved process for treatment of waste water, for purification thereof with a view to effectively remove all the dissolved/undissolved impurities from such waste water and also render it recyclable basically involving electro-chemical reaction by way of electrolysis.

It has also been found by the applicants herein, on experimentation, that following the treatment of the waste water by the improved electrolysis procedure, to be described hereinafter, as and when the purified water is subjected to filtration, and optionally, if so required, the waste water is subjected to sparging of microscopic air bubbles therethrough during the course of electrolysis, much more effective result, compared to what is so for achieved by the conventional techniques, is and can be rendered possible.

**Detailed Description :**

Accordingly, the present invention provides a process for treatment of waste water, for purification thereof, comprising causing ascending flow of the waste water under treatment, through a column, made of plastics, having composite electrodes immersed therein, the anode of the said electrodes being constituted by combination of iron and aluminium, while the cathode being constituted by iron alone, the said column being provided on its top with a hopper-bottom receptacle made of plastics, so that on energisation of the said electrodes, the ascending flow of the waste water is subjected to electrochemical reaction, whereby the impurities in the waste water are separated and are drained out from top of the column, followed by filtration of the water, so purified, by passing it through a filter medium, and, optionally, if so required, sparging sub-microscopic bubbles of air in upward direction through the column, in the course of electrolysis of the waste water, for carrying the suspended and floccullated solids in the waste water, under treatment, upwards, so as to be drained out through the outlet, provided on top of the column.

It has been found by the applicants that effective result is and can be achieved by treatment basically involving a synergistic combination also of electrochemical reaction, by way of the improved electrolysis, oxidation and dissolved air floatation.

Accordingly the present invention provides a process for treatment of waste water for purification thereof, and also its recycle comprising causing ascending flow of the waste water through a column made of plastics, having composite electrodes immersed therein, the anode of the said electrodes being constituted by combination of iron and aluminium, while the cathode being constituted by iron alone, the

4

said column being provided on its top with a hopper-bottom receptacle, made of plastics, and introducing gaseous oxygen, under pre-determined pressure, from below the column for ascending flow of oxygen gas bubbles through the waste water, which is subjected to electrochemical reaction on energisation of the said electrodes, whereby the waste water is subjected to synergistic combination of electrochemical, oxidation and dissolved air floatation treatments, and the impurities separated from the waste water due to such combined treatments, are drained out from top of the column, after being settled on the hopper-bottom receptacle, provided on top of the column, and the purified water is caused to be taken out from top of the said receptacle.

The applicants herein had earlier developed a process of removing impurities such as phenols, COD, colour and Toxicants (such as cyanides) to permissible levels from waste water generated in manufacturing dyestuffs and dye intermediates and textile processing industries, comprising passing predetermined quantity of Ozone in the form of fine bubbles from the bottom of a column containing the said highly contaminated waste water, and granulated activated Carbon, so as to fluidise the activated carbon powder and to form fluidised bed, resulting in increased interfacial area for Ozone gas between the activated carbon and the waste water whereby the impurities in the waste water are oxidised into low molecular polar biodegradable compounds which get adsorbed at said activated carbon surface, and the said biodegradable compounds are maintained in contact with waste water in the fluidised bed for a predetermined time to form biofilm to retain oxidised products which are not adsorbed on the said active carbon.

It has been found that a remarkable synergistic combination results when ozone($O_3$) is passed through a column containing highly contaminated waste water (such as effluents from dyestuff and dye intermediate manufacturing plants, textile chemical processing plants etc.) and granular activated carbon (GAC). When ozone is passed through a hopper bottom using a distributor, its flow upwards keeps the bed of activated carbon particles in a fluidised state. The chemistry behind the invention is explained by a combination of following different pathways involved :

i)
   a) When ozone is passed through column, a large number of fine bubbles provide increased interfacial area between ozone bubble and the effluent containing impurities thereby enhancing the absorption of ozone into the effluent. This enhanced absorption results in increased oxidation of soluble impurities.
   b) The fluidization of activated carbon provided by gas bubbles results in an increased interfacial area of $O_3$ gas between the activated carbon and the effluent. This effects greater adsorption of impurities at carbon surface.
   c) The bubbles also lead to some chemisorption of impurities on activated carbon.
   d) Refractory compounds which are difficult to remove or degrade by either ozonization or activated carbon also break down under this synergistic combination.

ii) Direct reaction of the solute (i.e. the dissolved impurities in the effluent) with ozone; Reaction of this type may be represented by the generalised scheme :

$$M + O_3 \; M'_{oxid} + M''_{oxid}$$

where M is the solute and $M'_{oxid}$ and $M''_{oxid}$ are quasifinal oxidation products which are only slowly or not at all further oxidized by ozone.

iii) Oxidation of the solute and scavenger materials e.g. $HCO_3^-$ humic acids, $Cl^-$, $NH_4$ etc by OH radicals formed from auto-decomposition of ozone.

The applicants have now found, on experimentation, that comparatively better result can be achieved by the combined treatment of the same by electrolysis, as proposed herein, and by ozone.

Accordingly the present invention further provides a process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by iron alone, the said column being provided on its top with a hopper-bottom receptacle, made of plastics, and introducing ozone, under pre-determined pressure, from below the column for ascending flow of ozone gas bubbles through the waste water, which is subjected to electrochemical reaction on energisation of the said electrodes, whereby the waste water is subjected to synergistic combination of electrochemical, oxidation and dissolved air floatation treatments, and the impurities separated from the waste water due to such combined treatments, are drained out from top of the column, after being settled on the hopper-bottom receptacle, provided on top of the column, and the purified water is caused to be taken out from top of the said receptacle.

It has been further found by the Applicants herein, on experimentation, that along with the improved electrolysis procedure, described herein, as and when the waste water under treatment is subjected to fluidization the synergistic combination of such treatments augment performance of the system in terms of purification efficiency, removal of some of the refractory components like phenols and dyes and dye intermediates from the waste water, removal of the compounds which are in very low concentrations and are, therefore, difficult to remove, to augment performance of the electrolysis per se by constantly keeping surfaces of the electrodes renewed and without any deposition by scrapping, to enhance turbulence in the waste water flowing through the column so that diffusion and mass transfer is enhanced and to make the system more compact.

Accordingly, the present invention also provides a process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by iron alone, the said column being provided on its top with a hopper-bottom receptacle made of plastics, so that on energisation of the said electrodes, the ascending flow of the waste water is subjected to electrochemical reaction, the said column further having activated carbon in granulated form in the waste water under treatment, whereby the waste water, on energisation of the electrodes, is subjected to electrochemical treatment as well as fluidisation, caused by the granular particles of the activated carbon, for separation of the impurities of the waste water and settlement thereof in the bottom hopper receptacle to be drained out through the outlet therefor.

In an alternative embodiment, the invention provides a process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by iron alone, the said column being provided on its top with a hopper-bottom receptacle made of plastics, so that on energisation of the said electrodes, the ascending flow of the waste water is subjected to electrochemical reaction, the said column further having ceramic/glass particles mixed with the waste water under treatment, whereby the waste water, on energisation of the electrodes, is subjected to electrochemical treatment as well as fluidisation, caused by the ceramic/glass particles, for separation of the impurities of the waste water and settlement thereof in the bottom hopper receptacle to be drained out through the outlet therefor.

Optionally, if so required, the alternative/further embodiments of the process, as described herein, may include the step of sparging sub-microscopic bubbles of air in upward direction through the column for carrying the suspended solids of the waste water, under treatment, upwards, so as to be drained out through the outlet provided therefor on top of the column.

In the aforementioned process of the instant invention, as and when fluidised bed is formed by using granular activated carbon, because of physico-chemical adsorption of the dissolved impurities on the carbon surface, effective result is found to be achieved. That apart, because of causing fluidisation of the waste water under treatment, and which is also simultneously subjected to the improved electrolysis, turbulence of the waste water is enhanced resulting in higher diffusion and mass transfer and higher inter-facial area.

As and when Fluidised bed is formed by using ceramic/glass beads, in particulate form, these act as inert medium for fluidisation.

It has been found by the Applicants herein, as aforesaid, that along with the improved electrolysis procedure, as and when the waste water under treatment is subjected to fluidization, the synergistic combination of such treatments augment performance of the system in terms of purification efficiency, removal of some of the refractory components like phenols from the waste water, removal of the compounds which are in very low concentrations and are, therefore, difficult to remove, to augment performance of the electrolysis per se by constantly keeping surfaces of the electrodes renewed and without any deposition by scrapping, to enhance turbulence in the waste water flowing through the column so that diffusion and mass transfer is enhanced and to make the system more compact.

It has been further found by the applicants herein that by sparging of gaseous oxygen/ozone through the waste water, subjected to the afore-mentioned combined treatment, some of the limitations of such combined treatment, can be circumvented.

Accordingly, the present invention provides a process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by iron alone, the said column being provided on its top with a hopper bottom receptacle made of plastics, so that on energisation of the said electrodes, the ascending flow of the waste water is subjected to electrochemical reaction, the said column further having activated carbon in granulated form in the waste water under treatment, whereby the waste water, on energisation of the electrodes, is subjected to electrochemical treatment as well as fluidisation, caused by the granular particles of activated carbon, and introducing gaseous oxygen/ozone, under predetermined pressure, from below the column, whereby the waste water is subjected to a synergistic combination of electrochemical, oxidation, fluidisation and dissolved air floatation treatments, for separation of the impurities from the waste water and settlement thereof in the bottom-hopper receptacle, to be drained out through outlet therefor.

In a further alternative embodiment, the invention provides a process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by iron alone, the said column being provided on its top with a hopper bottom receptacle made of plastics, so that on energisation of the said electrodes, the ascending flow of the waste water is subjected to electrochemical reaction, the said column further having glass/ceramic particles in the waste water under treatment, whereby the waste water, on energisation of the electrodes, is subjected to electrochemical treatment as well as fluidisation, caused by the glass/ceramic particles, and introducing gaseous oxygen/ozone, under pre-determined pressure, from below the column, whereby the waste water is subjected to a synergistic combination of electrochemical, oxidation, fluidisation and dissolved air floatation treatments, for separation of the impurities from the waste water and settlement thereof in the bottom-hopper receptacle, to be drained out through outlet therefor.

It has been observed by the Applicants herein that electrochemical treatment of the waste water, as proposed herein, brings about purification thereof by the following physico-chemical phenomena :

(a) Electrochemical coagulation and flocculation of iron and aluminium take place from the composite electrode. Iron and aluminium of the composite anode form iron and aluminium hydroxide matrices which entrap the non-soluble impurities because of their large size as also they react with some dissolved impurities like dyes to form complex non-soluble compounds in the form of 'FLOCS'. When D.C. current at about 12-16 volts is passed through the waste water, by means of the electrodes, the composite anode goes into solution perhaps in accordance with Faraday's law, and forms the hydroxides, as mentioned earlier. These hydroxides are far more reactive than the ones produced by dissolution of alum and ferrous sulfate by direct addition thereof to water, as is conventionally done. The purification efficiency of the 'electro- coagulation' is, therefore, much higher than that for the normal coagulation method. Also, it exhibits much greater versatility in terms of removal of several impurities from the waste water;

(b) Adsorption of some of the impurities on the hydroxide matrices takes place by Vanderwal's forces;

(c) Dissociation of water into the free radicals occur, which react with the impurities and convert them into harmless compounds;

(d) Oxidation of the impurities takes place by oxygen generated due to electrolysis;

(e) Some of the stable compounds break down by ozone, generated in the process;

(f) The impurities are reduced by generation of hydrogen.

(g) The gases evolved at electrodes ascend the column carrying the flocculated impurities with them to the top almost in a DAF like phenomenon.

The dose of iron and aluminium electrochemically added to the waste water, as a result of the electrolysis, may range from about 50 mg/l to 700 mg/l depending upon the type of impurities and the level to which it is to be brought down. Similarly, the current may be passed in a range from about 50 to 650 amperes per kilolitre of the effluent, depending on requirement. The range of current density may be selected to be 3 to 40 Ampere/Sq.Meter of the total surface area of the electrodes. Hydraulic retention time of the waste water in the electrolysis column for efficient eventual removal of almost all the impurities like suspended solids, C.O.D., B.O.D., colour, toxicity, detergents, oil and grease, ammoniacal nitrogen, heavy metals etc., is preferably in the ranges from about one minute to ten minutes. Gap between the electrodes is crucial from the point of view of power consumption as well as effluent treatment. It should desirably range from 5 mm to 10 cm.

As the electrolysed liquid flows out of the top of the column into the hopper-bottom receptacle with a much wider cross section, the impurities in the form of heavy flocs settle under gravity at the bottom of the receptacle and are carried away by the effluent into the filter column. On the other hand, light impurities rise to the top along with the ascending gas bubbles and form a layer of 'froth' on the open surface of the receptacle. Frothy liquid along with some 'flocs' are drained. It has been found that the bluish-green 'froth' and 'flocs' collected at the top of the column as well as at the bottom of the receptacle, exhibit considerable purifying characteristic when mixed with, the raw effluent, probably because of adsorptive characteristic, as well as due to unreacted metal hydroxides present in it.

Characteristic, as well as due to unreacted metal hydroxides present in it.

Electrolysed, flocculated waste water from the receptacle bottom is preferably caused to flow into another plastic column containing a polypropylene filtering bag. Passage of the waste water through the bag removes all the flocculated impurities in the form of a cake deposited on the inside surface of the bag. Consequently, crystal clear, purified, water-like effluent flows out from the bottom of the filtration column.

As stated hereinbefore fluidised bed is formed by using granular activated carbon, and, as a result, because of physico-chemical adsorption of the dissolved impurities on the carbon surface, effective result has been found to be achieved. That apart, because of causing fluidisation of the waste water under treatment, and which is also simultneously subjected to the improved electrolysis, turbulence of the waste water is enhanced resulting in higher diffusion and mass transfer and higher inter-facial area. However, if only activated carbon particles are used for waste water purification in the form of a "fixed-bed", it is likely to suffer from the following limitations :

i) Low interfacial area due to the fixed bed;

ii) Low amount of impurities adsorbed per unit weight of carbon at saturation;

iii) Clogging/fouling of the bed resulting in high pressure drop and underutilisation of the carbon bed;

iv) No generation of the carbon surface after saturation. Therefore, the used carbon cannot be reused; it has to be discarded. This makes the process very expensive.

It has been found that combination of fluidisation with the improved electrolysis and "DAF", offsets the limitations because of :

Higher turbulence and interfacial area due to the fluidisation in which carbon particles are kept in a continuous swirling motion by upward flow of both gas and liquid;

Oxidation and reduction of the adsorbed impurities by oxygen/ozone and electrolysis respectively; Due to continuous swirling movements of the carbon particles, no clogging/fouling of the bed can occur.

As a result, use of the activated carbon is made more cost effective, versatile and efficient.

## Description of the drawings :

The nature of the present invention will be better understood from the following description, set out by way of example, with reference to the accompanying drawings, wherein:

Fig. 1 diagrammatically shows one embodiment of the arrangement for carrying out the process of the instant invention involving improved electrolysis followed by filtration;

Fig. 2 diagrammatically shows another embodiment of the arrangement for carrying out the process according to the instant invention involving improved electrolysis along with oxidation (either by oxygen or ozone) and dissolved air floatation;

Fig. 3 diagrammatically shows a further embodiment of the arrangement for carrying out the process according to the instant invention involving improved electrolysis along with fluidisation of the effluent (either by activated carbon particles or by ceramic/glass particles);

Fig. 4 diagrammatically shows a furthermore embodiment of the arrangement for carrying out the process according to the instant invention involving improved electrolysis combined with fluidisation (either by activated carbon particles or by ceramic/glass particles), as well as suprging of gaseous oxygen/ozone through the effluent under treatment.

In all the figures of the drawings the reference numerals 1 to 9 designate the same parts as these have been commonly used in the said figures.

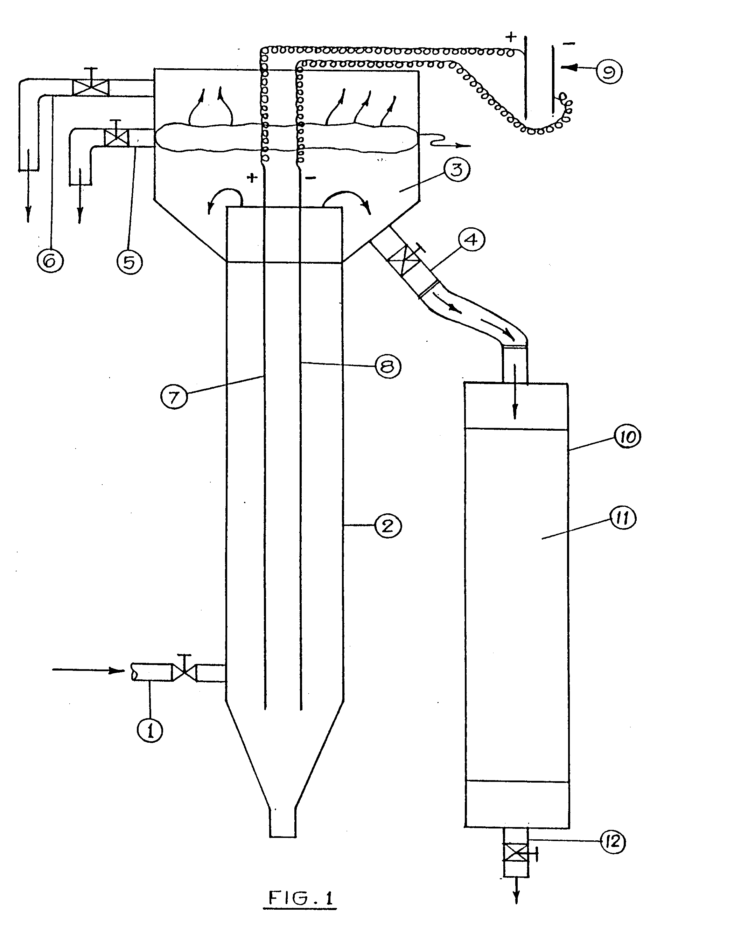

As shown in figure 1 of the drawings, the waste water is caused to be introduced through an inlet 1 provided at the bottom of an electrolysis column 2 made of plastics, e.g. polyethylene, said column 2 having provided on top thereof a hopper-bottom receptacle 3 made of plastics, e.g. polyethylene, which is provided with an outlet 4 for the purified water, an outlet 5 for draining of froth collected in the receptacle 3, and an outlet 6 for allowing overflow of the treated water. The column 2 has immersed therein two composite electrodes, the anode 7 whereof is constituted by combination of iron and aluminium, while the cathode 8 whereof is constituted by iron alone. The D.C. power supply source is indicated by 9. On energisation of the said electrodes, the waste water fed through the bottom of the column 2 is caused to have ascending flow and is also subjected to electrochemical reaction caused by the electrolysis. As stated hereinbefore the impurities so separated by the electrochemical reaction, settle at the bottom of the receptacle 3, and is caused to be taken out from time to time, through the outlet 5, while the water so purified is allowed to pass through the outlet 4 to another column 10 made of plastics e.g. polyethelene, having held therewithin plastics filter bag 11 e.g.of polypropylene, so that after passing through the said filter medium, clear and purified water can be taken out through an outlet 12 provided at the bottom of the said filter column 10.

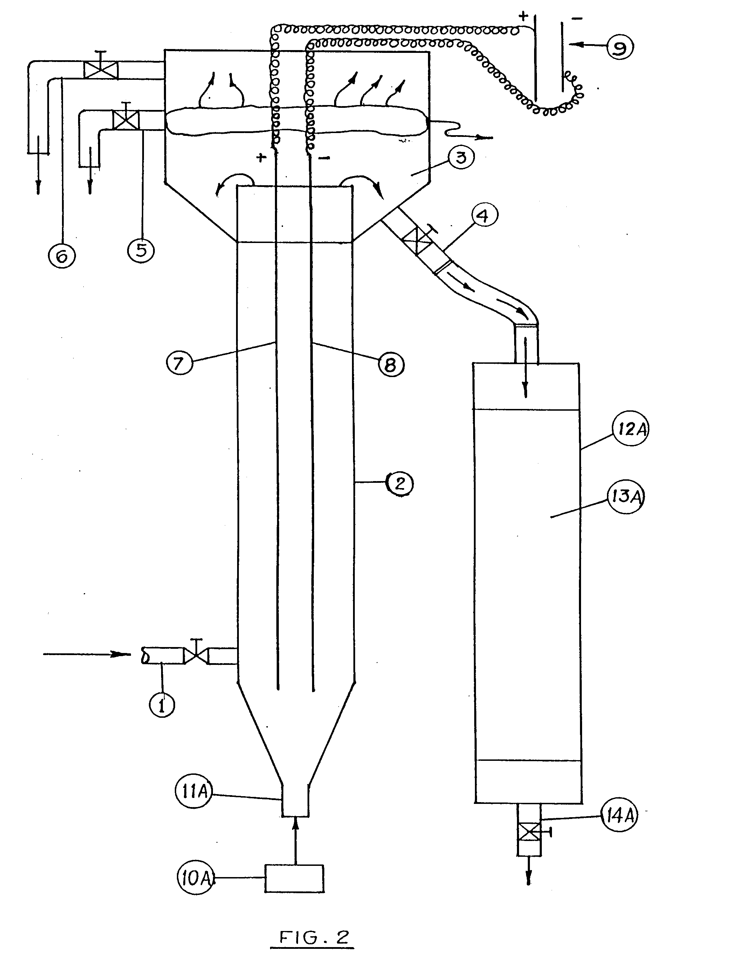

As shown in figure 2 of the drawings, the waste water is caused to be introduced through an inlet 1 provided at the bottom of an electrolysis column 2 made of plastics, e.g. polyethylene, said column 2 having provided on top thereof a hopper-bottom receptacle 3 made of plastics, e.g. polyethylene, which is provided with an outlet 4 for the purified water, an outlet 5 for draining of froth collected in the receptacle 3, and an outlet 6 for allowing overflow of the treated water. The column 2 has immersed therein two composite electrodes, the anode 7 whereof is constituted by combination of iron and aluminium, while the cathode 8 whereof is constituted by iron alone. The D.C. power supply source is indicated by 9. On energisation off the said electrodes, the waste water fed through the bottom of the column 2 is caused to have ascending flow and is also subjected to electrochemical reaction caused by the electrolysis. From a storage cylinder 10A, containing liquified oxygen, oxygen gas, under pressure, (or from an ozone generator 10A, e.g. ozone, under pressure of 35 to 45 psig) is fed through the hopper bottom 11A off the column 2. Thus, the waste water is subjected to synergistic combination of electrochemical reaction, oxidation and dissolved air floatation as explained hereinbefore.

The impurities so separated by the combined treatment, as aforesaid, settle at the bottom of the receptacle 3, and is caused to be taken out from time to time, through the outlet 5, while the water so purified is allowed to pass through the outlet 4 to another column 12A made of plastics e.g. polyethelene, (as in the case of the particular embodiment shown), having held therewithin plastics filter bag 13A e.g.of polypropylene, so that after passing through the said filter medium, clear and purified water can be taken out through an outlet 14A provided at the bottom of the said filter column 12A.

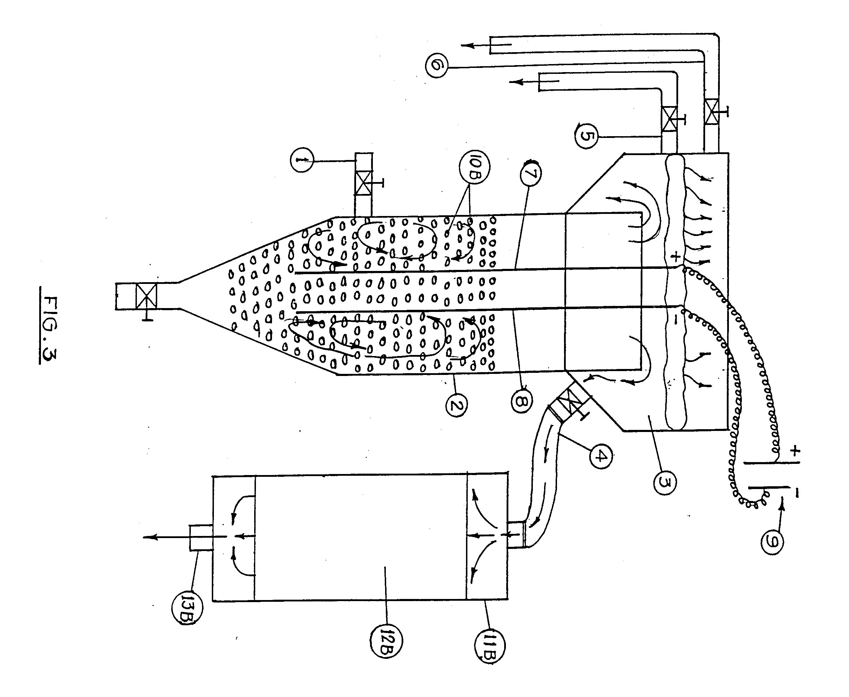

As shown in figure 3 of the drawings, the waste water is caused to be introduced through an inlet 1 provided at the bottom of an electrolysis column 2 made of plastics, e.g. polyethylene, said column 2 having provided on top thereof a hopper-bottom receptacle 3 made of plastics, e.g. polyethylene, which is provided with an outlet 4 for the purified water, an outlet 5 for draining of froth collected in the receptacle 3, and an outlet 6 for the allowing overflow of the treated water. The column 2 has immersed therein two composite electrodes, the anode 7 whereof is constituted by combination of iron and aluminium, while the cathode 8 whereof is constituted by iron alone. The D.C. power supply source is indicated by 9. On energisation of the said electrodes, the waste water fed through the bottom of the column 2 is caused to have ascending flow and is also subjected to electrochemical reaction caused by the electrolysis. The column 2 has activated carbon in granulated form (or ceramic/glass beads in particulate form) (indicated by 10B) mixed with the waste water under treatment. This causes synergistic combination of electro-chemical reaction and fluidisation, as explained hereinbefore, and the impurities are caused to be separated from the waste water, in an effective manner. The impurities so separated by the combined electrochemical reaction, and fluidisation, settle at the bottom of the receptacle 3, and is caused to be taken out from time to time, through the outlet 5, while the water, so purified, is preferably allowed to pass through the outlet 4 (as shown in the illustrated embodiment) to another column 11B made of plastics e.g. polyethelene, having held therewithin plastics filter bag 12B e.g.of polypropylene, so that after passing through the said filter medium, clear and purified water can be taken out through an outlet 13B provided at the bottom of the said filter column 11B.

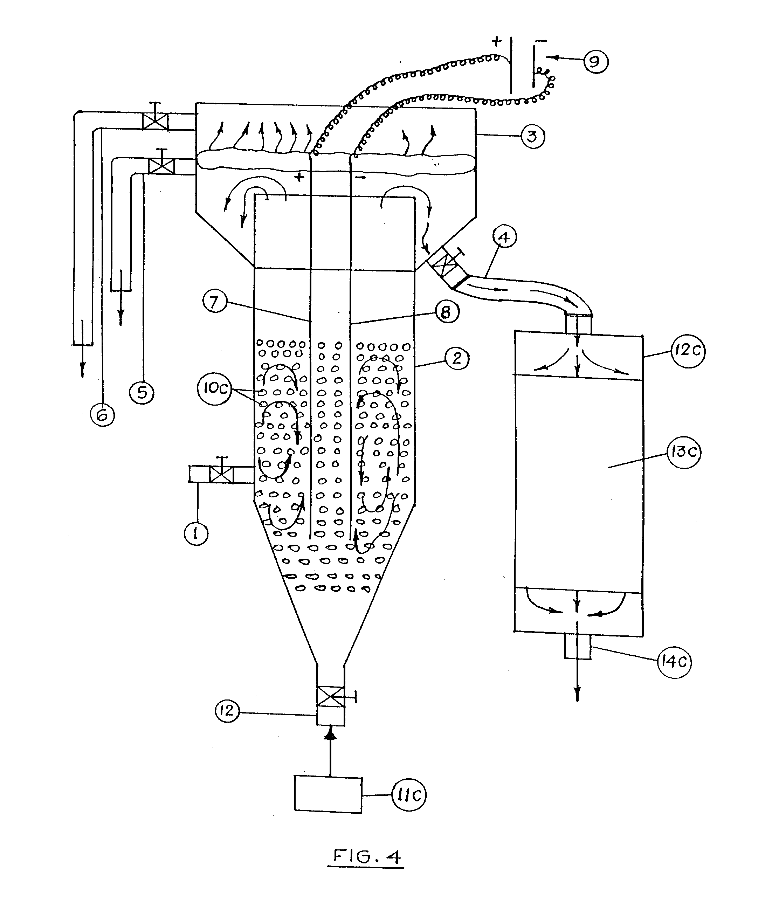

As shown in figure 4 of the drawings, the waste water is caused to be introduced through an inlet 1 provided at the bottom of an electrolysis column 2 made of plastics, e.g. polyethylene, said column 2 having provided on top thereof a hopper-bottom receptacle 3 made of plastics, e.g. polyethylene, which is provided with an outlet 4 for the purified water, an outlet 5 for draining of froth collected in the receptacle 3, and an outlet 6 for allowing overflow of the treated water. The column 2 has immersed therein two composite electrodes, the anode 7 whereof is constituted by combination of iron and aluminium, while the cathode 8 whereof is constituted by iron alone. The D.C. power supply source is indicated by 9. On energisation of the said electrodes, the waste water fed through the bottom of the column 2 is caused to have ascending flow and is also subjected to electrochemical reaction caused by the electrolysis. The column 2 has activated carbon in granulated form (or ceramic/glass beads in particulate form) (indicated by 10C) mixed with the waste water under treatment. Simultaneously gaseous oxygen/ozone is fed, under pressure, from a source 11C thereof through the bottom 12C of the column 2, so that the activated carbon particles (or ceramic/glass beads in particulate form) mixed with the waste water, under treatment, are no more retained a fixed bed. This causes synergistic combination of electro-chemical reaction fluidisation, oxidation and dissolved air floatation, as explained hereinbefore, and the impurities are caused to be separated from the waste water, in an effective manner. The impurities so separated by the combined treatment, as aforesaid, settle at the bottom of the receptacle 3, and is caused to be taken out from time to time, through the outlet 5, while the water, so purified, is preferably allowed to pass through the outlet 4 (as 15. shown in the illustrated embodiment) to another column 12C made of plastics e.g. polyethelene, having held therewithin plastics filter bag 13C e.g.of polypropylene, so that after passing through the said filter medium, clear and purified water can be taken out through an outlet 14C provided at the bottom of the said filter column 12C.

In the embodiments of the process, according to the instant invention, involving improved electrolysis with or without combination of oxidation/dissolved air floatation, preferred dimensions of the system for carrying out such embodiments of the process, and preferred conditions to be adopted are as under :

| | |
|---|---|
| Height of electrolysis column (Cylindrical) | 2 1/2' to 6' - 0" |
| Diameter of the column | 6" to 4-1/2' |
| Sacrificial Anode dose | 50 to 700 mg/l |
| Average Superficial Water Velocity | 0.2 to 1M/Sec |
| Retention time of waste water in the column | 3 to 15 Minutes |

Again, in the embodiments of the process, according to the instant invention, involving improved electrolysis in combination with fluidisation, with or without oxidation (either by gaseous oxygen or ozone), the preferred dimensions of the system for carrying out such embodiments of the process, and the preferred conditions to be adopted therefor are as under :

a) Voltage : 12 to 24 Volts;

b) Ampere : 20 to 300 Ampere/Kilolitre/hr depending upon impurities;

c) Gap between electrodes : 1" to 3"

d) Current density based on total surface area of the electrodes : 0.5 to 65 mA/Sq.cm.;

e) Dose of the sacrificial anode: 20 to 250 mg/litre of waste water;

f) Column dia: 6" to 5'-0";

g) Column Height: 2 1/2' to 5';

h) Size of the activated carbon particles: 3 to 8 mm;

i) Depth of the fluidised-bed : 50 - 70% of the column height;

j) Average superficial velocity of waste water in the column : 0.15 to 0.5 M/Sec.;

k) Hydraulic retention time in the column: 0.25 to 420 seconds;

l) Quantity of solid particles (activated carbon particles) per unit weight of waste water : 20 - 85 gms/100 gm of waste water.

Comparative performance of different embodiments of this invention is given in following Table.

It is to be understood that various modifications of the embodiments of the process according to the instant invention are possible within the scope of what has been described hereinbefore, and will be claimed hereinafter.

**TABLE**

**COMPARATIVE PERFORMANCE OF DIFFERENT EMBODIMENTS**

% Impurities Removal (Range)

| Impurities / Embodiment/Technique | Suspended Solids | Chemical Oxygen Demand | Bio-Chemical Oxygen Demand | Colour | Oils & Grease | Phenolics | Detergents | Ammoniacal Nitrogen | Heavy Metals | Toxicity |
|---|---|---|---|---|---|---|---|---|---|---|
| Simple Iono-Oxidation (I.O.) | 40-90 | 35-70 | 20-50 | 40-90 | 20-45 | 10-25 | 25-55 | 20-45 | 35-50 | 25-50 |
| I.O. + Oxygen Sparging | 40-95 | 40-75 | 20-50 | 45-90 | 30-55 | 10-25 | 45-60 | 20-45 | 40-55 | 25-50 |
| I.O. + Ozone Sparging | 55-100 | 55-90 | 40-70 | 55-98 | 30-55 | 25-50 | 45-60 | 35-55 | 60-85 | 40-70 |
| I.O. + Activated Carbon | 65-100 | 65-95 | 50-85 | 75-99 | 30-60 | 40-75 | 50-75 | 55-75 | 70-90 | 60-85 |
| I.O. + Ceramic/ glass particles | 40-95 | 40-75 | 25-50 | 40-90 | 20-45 | 10-25 | 30-60 | 20-45 | 35-50 | 25-50 |
| I.O. + Activated Carbon + Fluidisation through O2+O3 | 60-100 | 70-98 | 70-95 | 90-100 | 70-90 | 60-90 | 75-85 | 65-75 | 85-98 | 70-95 |
| I.O. + glass/ ceramic particle + Fluidisation through O2/O3 | 55-100 | 55-95 | 40-80 | 60-90 | 30-55 | 25-50 | 45-60 | 35-55 | 60-85 | 40-70 |

## Claims

1. A process for treatment of waste water, for purification and recycle thereof comprising causing ascending flow of the waste water under treatment, through a column, made of plastics, having composite electrodes immersed therein, the anode of the said electrodes being constituted by combination of iron and aluminium, while the cathode being constituted by iron alone, the said column being provided on its top with a hopper-bottom receptacle made of plastics, so that on energisation of the said electrodes, the ascending flow of the waste water is subjected to electrochemical reaction, whereby the impurities in the waste water are separated and are drained out from top of the column, followed by filtration of the water, so purified, by passing it through a filter medium, and, optionally, if so required, sparging sub-microscopic bubbles of air in upward direction through the column, in the course of electrolysis of the waste water, for carrying the suspended solids in the waste water, under treatment, upwards, so as to be drained out through the outlet, provided on top of the column.

2. A process for treatment of waste water for purification thereof, comprising causing ascending flow of the waste water through a column made of plastics, having composite electrodes immersed therein, the anode of the said electrodes being constituted by combination of iron and aluminium, while the cathode

11

being constituted by iron alone, the said column being provided on its top with a hopper-bottom receptacle, made of plastics, and introducing gaseous oxygen, under pre-determined pressure, from below the column for ascending flow of oxygen gas bubbles through the waste water, which is subjected to electrochemical reaction on energisation of the said electrodes, whereby the waste water is subjected to synergistic combination of electrochemical, oxidation and dissolved air floatation treatments, and the impurities separated from the waste water due to such combined treatments, are drained out from top of the column, after being settled on the hopper-bottom receptacle, provided on top of the column, and the purified water is caused to be taken out from top of the said receptacle.

3. A process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by iron alone, the said column being provided on its top with a hopper-bottom receptacle, made of plastics, and introducing ozone, under predetermined pressure, from below the column for ascending flow of ozone gas bubbles through the waste water, which is subjected to electrochemical reaction on energisation of the said electrodes, whereby the waste water is subjected to synergistic combination of electrochemical, oxidation and dissolved air floatation treatments, and the impurities separated from the waste water due to such combined treatments, are drained out from top of the column, after being settled on the hopper-bottom receptacle, provided on top of the column, and the purified water is caused to be taken out from top of the said receptacle.

4. A process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by iron alone, the said column being provided on its top with a hopper-bottom receptacle made of plastics, so that on energisation of the said electrodes, the ascending flow of the waste water is subjected to electrochemical reaction, the said column further having activated carbon in granulated form in the waste water under treatment, whereby the waste water, on energisation of the electrodes, is subjected to electrochemical treatment as well as fluidisation, caused by the granular particles of the activated carbon, for separation of the impurities of the waste water and settlement thereof in the bottom hopper receptacle to be drained out through the outlet therefor.

5. A process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by iron alone, the said column being provided on its top with a hopper-bottom receptacle made of plastics, so that on energisation of the said electrodes, the ascending flow of the waste water is subjected to electrochemical reaction, the said column further having ceramic/glass particles mixed with the waste water under treatment, whereby the waste water, on energisation of the electrodes, is subjected to electrochemical treatment as well as fluidisation, caused by the ceramic/glass particles, for separation of the impurities of the waste water and settlement thereof in the bottom hopper receptacle to be drained out through the outlet therefor.

6. A process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by Iron alone, the said column being provided on its top with a hopper bottom receptacle made of plastics, so that on energisation of the said electrodes, the ascending flow of the waste water is subjected to electrochemical reaction, the said column further having activated carbon in granulated form in the waste water under treatment, whereby the waste water, on energisation of the electrodes, is subjected to electrochemical treatment as well as fluidisation, caused by the granular particles of activated carbon, and introducing gaseous oxygen/ozone, under predetermined pressure, from below the column, whereby the waste water is subjected to a synergistic combination of electrochemical, oxidation, fluidisation and dissolved air floatation treatments, for separation of the impurities from the waste water and settlement thereof in the bottom-hopper receptacle, to be drained out through outlet therefor.

12

7. A process for treatment of waste water, for purification thereof, comprising causing ascending flow of the waste water through a column made of plastics, having composite electrodes immersed therein, the anode of the said electrodes being constituted by combination of iron and aluminium, while the cathode being constituted by iron alone, the said column being provided on its top with a hopper bottom receptacle made of plastics, so that on energisation of the said electrodes, the ascending flow of the waste water is subjected to electrochemical reaction, the said column further having glass/ceramic particles in the waste water under treatment, whereby the waste water, on energisation of the electrodes, is subjected to electrochemical treatment as well as fluidisation, caused by the glass/ceramic particles, and introducing gaseous oxygen/ozone, under pre-determined pressure, from below the column, whereby the waste water is subjected to a synergistic combination of electrochemical, oxidation, fluidisation and dissolved air floatation treatments, for separation of the impurities from the waste water and settlement thereof in the bottom-hopper receptacle, to be drained out through outlet therefor.

8. A process as claimed in any of claims 2 to 7, wherein the water, so purified, is caused to flow through a filter medium which is constituted by a column, made of plastics e.g. polyethylene, containing a polypropylene filter bag.

9. A process as claimed in claim 4 or 5, wherein spurging of sub-microscopic bubbles of air in upward direction is caused to be made through the column for carrying the suspended solids of the waste water, under treatment, upwards, so as to be drained out through the outlet provided therefor on top of the column.

10. A process as claimed in claim 3, wherein ozone is introduced at 35 -45 psig pressure, which augments the purification process by oxidation of some of the impurities as well as by creating a "DAF"-like effect.

11. A process as claimed in any of claims 1 to 3, wherein the conditions to be adopted for carrying out the same are as under :

| | |
|---|---|
| Height of electrolysis column (Cylindrical) | 2 1/2' to 6' - 0" |
| Diameter of the column | 6" to 4-1/2' |
| Sacrificial Anode dose | 50 to 700 mg/l |
| Average Superficial Water Velocity | 0.2 to 1M/Sec |
| Retention time of waste water in the column | 3 to 15 Minutes |

12. A process according to claim 11 wherein the current is passed between the electrodes in a range from 50 to 650 Ampres/Kilo litre of the effluent, the range of current density is selected to be 3 to 40 Ampres/Sq. Metre of the total surface area of the electrodes, and the gap between the electrodes is in the range from 5 mm. to 10 cm., the aforesaid parametres being dependent upon requirement.

13. A process as claimed in any of claims 4 to 7, wherein the conditions to be adopted for carrying out the same are as under :
   a) Voltage : 12 to 24 Volts;
   b) Ampere : 20 to 300 Ampere/Kilolitre/hr depending upon impurities;
   c) Gap between electrodes : 1" to 3"
   d) Current density based on total surface area of the electrodes : 0.5 to 65 mA/Sq.cm.;
   e) Dose of the sacrificial anode: 20 to 250 mg/litre of waste water;
   f) Column dia: 6" to 5'-0";
   g) Column Height: 2 1/2' to 5';
   h) Size of the activated carbon particles: 3 to 8 mm;
   i) Depth of the fluidised-bed : 50 - 70% of the column height;
   j) Average superficial velocity of waste water in the column : 0.15 to 0.5 M/Sec.;
   k) Hydraulic retention time in the column: 0.25 to 420 seconds;
   l) Quantity of solid particles (activated carbon particles) per unit weight of waste water : 20 - 85 gms/100 gm of waste water.

14. A device for treatment of waste water, for purification thereof, comprising a column made of plastics or any other electrically non-conductive material, having composite electrodes immersed therein, the anode of the said electrodes being constituted by combination of iron and aluminium, while the cathode being constituted by Iron alone, the said column being provided on its top with a hopper-bottom receptacle made of plastics or any other electrically non-conductive material, so that on energisation of the said electrodes, the ascending flow of the waste water, fed through an inlet provided at the bottom of the column, is subjected to electrochemical reaction, the said hopper-bottom receptacle having outlets for drainage of the impurities as also for that of froth collected in the receptacle and also for allowing overflow of the treated water, and an outlet for the purified water so treated, the outlet for the purified water being connected to a filter medium, and the said column being optionally provided with means at the bottom thereof for spurging sub-microscopic bubbles of air in upward direction through the column, in the course of electrolysis of the waste water.

15. A device for treatment of waste water, for purification thereof, comprising a column made of plastics or any other electrically non-conductive material, having composite electrodes immersed therein, the anode of the said electrodes being constituted by combination of iron and aluminium, while the cathode being constituted by iron alone, the said column being provided on its top with a hopper-bottom receptacle made of plastics or any other electrically non-conductive material, so that on energisation of the said electrodes, the ascending flow of the waste water, fed through an inlet provided at the bottom of the column, is subjected to electrochemical reaction, the said hopper-bottom receptacle having outlets for drainage of the impurities as also for that of froth collected in the receptacle and also for allowing overflow of the treated water, and an outlet for the purified water so treated, and a source of oxygen for introducing gaseous oxygen, under pre-determined pressure, from below the column for ascending flow of oxygen gas bubbles through the waste water, in the course of electrolysis of the waste water.

16. A device for treatment of waste water, for purification thereof comprising a column made of plastics, or any other electrically non-conductive material, having composite electrodes immersed therein, the anode of the said electrodes being constituted by combination of iron and aluminium, while the cathode being constituted by iron alone, the said column being provided on its top with a hopper-bottom receptacle made of plastics or any other electrically non-conductive material, so that on energisation of the said electrodes, the ascending flow of the waste water, fed through an inlet provided at the bottom of the column, is subjected to electrochemical reaction, the said hopper-bottom receptacle having outlets for drainage of the impurities as also for that of froth collected in the receptacle and also for allowing overflow of the treated water, and an outlet for the purified water so treated, and a source of ozone for introducing ozone, under pre-determined pressure, from below the column for ascending flow of ozone gas bubbles through the waste water, in the course of electrolysis thereof.

17. A device for treatment of waste water, for purification thereof, comprising a column made of plastics or any other electrically non-conductive material, having composite electrodes immersed therein, the anode of the said electrodes being constituted by combination of iron and aluminium, while the cathode being constituted by iron alone, the said column being provided on its top with a hopper-bottom receptacle made of plastics or any other electrically non-conductive material, so that on energisation of the said electrodes, the ascending flow of the waste water, fed through an inlet provided at the bottom of the column, is subjected to electrochemical reaction, the said hopper-bottom receptacle having outlets for drainage of the impurities as also for that of froth collected in the receptacle and also for allowing overflow of the treated water, and an outlet for the purified water so treated, the said column being provided with activated carbon in granulated form in the waste water under treatment, whereby the waste water on energisation of the electrodes, is subjected to electrochemical treatment as well as fluidisation, caused by the granular particles of the activated carbon, for separation of tie impurities of the waste water and settlement thereof in the bottom hopper receptacle to be drained out through the outlet thereof.

18. A device for treatment of waste water, for purification thereof, comprising a column made of plastics or any other electrically non-conductive material, having composite electrodes immersed therein, the anode of the said electrodes being constituted by combination of iron and aluminium, while the cathode being constituted by iron alone, the said column being provided on its top with a hopper-bottom receptacle mad of plastics or any other electrically non-conductive material, so that on energisation of the said electrodes, the ascending flow of the waste water fed through an inlet provided at the bottom of the column, is subjected to electrochemical reaction, the said hopper-bottom receptacle having outlets for drainage of the impurities as also for that of froth collected in the receptacle and also for allowing overflow of the treated water, and an outlet for the purified water so treated, the said column being provided with ceramic/glass particles in the waste water under treatment, whereby the waste water on energisation of the electrodes, is subjected to electrochemical treatment as well as fluidisation, caused by the ceramic/glass particles, for separation of the impurities of the waste water and settlement thereof in the bottom hopper receptacle to be drained out through the outlet thereof.

19. A device for treatment of waste water, for purification thereof comprising a column made of plastics or any other electrically non-conductive material, having composite electrodes immersed therein, the anode of the said electrodes being constituted by combination of iron and aluminium, while the cathode being constituted by iron alone, the said column being provided on its top with a hopper-bottom receptacle mad of plastics or any other electrically non-conductive material, so that on energisation of the said electrodes, the ascending flow of the waste water, fed through an inlet provided at the bottom of the column, is subjected to electrochemical reaction, the said hopper-bottom receptacle having outlets for drainage of the impurities as also for that of froth collected in the receptacle and also for allowing overflow of the treated water, and an outlet for the purified water so treated, the said column being provided with activated carbon in granulated form in the waste water under treatment, and there being also provided a source of gaseous oxygen/ozone for introduction of gaseous oxygen ozone, under pre-determined pressure, from below the column, whereby the waste water is subjected to a synergistic combination of electrochemical, oxidation, fluidisation and dissolved air floatation treatments, for separation of the impurities from the waste water and settlement thereof in the bottom-hopper recepatcle, to be drained out through outlets therefor.

20. A device for treatment of waste water, for purification thereof comprising a column made of plastics or any other electrically non-conductive material, having composite electrodes immersed therein, the anode of the said electrodes being constituted by combination of iron and aluminium, while the cathode being constituted by iron alone, the said column being provided on its top with a hopper-bottom receptacle mad of plastics or any other electrically non-conductive material, so that on energisation of the said electrodes, the ascending flow of the waste water, fed through an inlet provided at the bottom of the column, is subjected to electrochemical reaction, the said hopper-bottom receptacle having outlets for drainage of the impurities as also for that of froth collected in the receptacle and also for allowing overflow of the treated water, and an outlet for the purified water so treated, the said column being provided with ceramic/glass particles in granulated form in the waste water under treatment, and there being also provided a source of gaseous oxygen/ozone for introduction of gaseous oxygen/ozone, under pre-determined pressure, from below the column, whereby the waste water is subjected to a synergistic combination of electrochemical, oxidation, fluidisation and dissolved air floatation treatments, for separation of the impurities from the waste water and settlement thereof in the bottom-hopper receptacle, to be drained out through outlets therefor.

21. A device according to any of claims 15 to 20, wherein the outlet of the purified water from the colum is connected to a filter medium.

22. A device according to claim 21, wherein the said filter medium is constituted by a column, made of plastics e.g. polyethylene, containing a polypropylene filter bag.

23. A device according to any of claims 14 to 16 wherein the following parameters are adopted :

| | |
|---|---|
| Height of electrolysis column (Cylindrical) | 2 1/2' to 6' - 0" |
| Diameter of the column | 6" to 4-1/2' |

24. A device according to any of claims 17 to 20, wherein the following parameters are adopted :
    a) Gap between electrodes : 1" to 3";
    b) Column dia : 6" to 5'-0";
    c) Column Height : 2 1/2' to 5'.

25. A process for treatment of waste water, for purification thereof, substantially as herein described with particular reference to the accompanying drawings.

26. A device for treatment of waste water for purification thereof, substantially as herein described with all references to, and as illustrated in the accompanying drawings.

FIG.1

FIG. 2

FIG. 3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 414 091 (ALEXANDR A. ASENKO ET AL.)<br><br>* column 3, line 41 - column 5, line 5; figures * | 1-7,9, 14-20 | C02F1/465<br>C02F1/78 |
| A | EP-A-0 041 480 (CIBA-GEIGY)<br><br>* page 8, line 10 - page 9, paragraph 6; figure * | 1,8,14, 21,22 | |
| A | DE-A-41 04 094 (GESSLAUER, RUDOLF)<br><br><br>* column 7; claims 1-3,8; figure * | 1,3,6,7, 10,16, 19,20 | |
| A | EP-A-0 231 100 (MURELL, WILFRED ANTHONY)<br><br>* column 6; claims 1,6,10 * | 1-7, 14-20 | |
| A | DE-A-23 45 353 (VEREINIGTE ÖSTERREICHISCHE EISEN- UND STAHLWERKE - ALPINE MONTAN AG)<br>* page 13; claims 1,10 *<br>* page 8, line 17 - line 26 *<br>* page 11, line 16 - line 22 * | 1-7, 14-20 | TECHNICAL FIELDS SEARCHED (Int.Cl.6)<br><br>C02F<br>B01D<br>B03D |
| A | GB-A-2 044 743 (HITACHI LTD)<br><br>* page 7; claims 1,17,18 *<br>* page 2, line 36 - line 44 *<br>* page 3, line 28 - line 40; figure 1 * | 4,6,17, 19 | |

The present search report has been drawn up for all claims

| Place of search | Date of completion of the search | Examiner |
|---|---|---|
| THE HAGUE | 14 July 1994 | Teply, J |

EPO FORM 1503 03.82 (P04C01)